# EUROPÄISCHE PATENTSCHRIFT

(11) **EP 1 859 974 B1**
(45) Veröffentlichungstag und Bekanntmachung des Hinweises auf die Patenterteilung: **13.10.2010**
(21) Anmeldenummer: 07009937.9
(22) Anmeldetag: 18.05.2007
(51) Int. Cl.: B60H 1/00

(54) **Verfahren zur Herstellung eines Fahrzeugs mit einer deckenseitige Innenverkleidung**
Method for manufacturing a vehicle comprising an interior ceiling cladding
Méthode de fabrication d'un véhicule comprenant un habillage intérieur du côté du revêtement

(30) Priorität: 23.05.2006 DE 102006024565
(43) Veröffentlichungstag der Anmeldung: 28.11.2007
(73) Patentinhaber: Hymer-Leichtmetallbau GmbH & Co. KG, 88239 Wangen (DE)
(72) Erfinder: Boetzelen, Rudolph, 88239 Wangen (DE)
(74) Vertreter: Riebling, Peter

(56) Entgegenhaltungen:
- EP-A- 1 500 576
- DE-A1- 1 780 606
- DE-A1- 3 729 050
- US-A1- 2002 030 374

## Beschreibung

Die Erfindung betrifft ein Verfahren zur Herstellung eines Fahrzeuges mit einer deckenseitigen Innenverkleidung, das zur Beförderung einer größeren Anzahl von Passagieren geeignet ist und deckenseitig mindestens einen Luftkanal für die Klimatisierung und eine Gepäckablage aufweist.

Der einfacheren Beschreibung wegen wird im Folgenden von einem Landfahrzeug, insbesondere einem Omnibus ausgegangen. Die Erfindung ist jedoch nicht auf die deckenseitige Verkleidung in einem Omnibus beschränkt. Alle nachfolgend beschriebenen Merkmale sind deshalb auch auf etwa gleichartig aufgebaute Luft- oder Wasserfahrzeuge zu übertragen, die einen Reisebusähnlichen Innenaufbau aufweisen.

Stand der Technik ist, dass der deckenseitige Aufbau eines solchen Fahrzeuges aus einer eigensteifen Fahrzeugzelle besteht. Diese ist aus im Abstand mit ihren Längsachsen etwa rechtwinklig zur Fahrzeuglängsachse angeordneten Dachspanten gebildet, die beidseitig an einem dachseitig in Längsrichtung verlegten Längsträger befestigt sind. In späteren Montagevorgängen werden diese Dachspanten mit einer Dachhaut verkleidet. Das dergestalt hergestellte Fahrzeuggerippe wird in späteren Arbeitsvorgängen innenseitig ausgebaut. Die vorliegende Erfindung beschäftigt sich mit dem Problem des Einbaus von Luftkanälen und Gepäckablagen in ein solches Fahrzeuggerippe.

Hierbei ist es aus der DE 37 29 050 A1 bekannt, für den Einbau dieser Teile in ein eigensteifes Fahrzeuggerippe, den Luftkanal und die Gepäckablage selbst auch als eigensteifes Gebilde mit einer sich über die gesamte Fahrzeuglänge erstreckenden Längsabmessung auszubilden.

Diese - eventuell mehreren - eigensteifen Gebilde werden dann nachträglich an dem (eigensteifen) Dachaufbau des Fahrzeuges befestigt. Nachteil sind jedoch die hohen Kosten, weil einerseits die durchgehende eigensteife Ausbildung als selbsttragendes Teil von Luftkanal und Gepäckablage zu höheren Kosten führt und weiterer Nachteil ist, dass ein erhöhter Montageaufwand vorhanden ist, weil die genannten Teile nachträglich an der Konstruktion des Fahrzeuggerippes befestigt werden müssen.

Bei der bekannten Befestigungsart eines eigensteifen Gebildes (bestehend aus einem durchgehenden Luftkanal und einem damit verbundenen Gepäckfach) mit etwa 11 m Länge (Fahrzeuglänge des Busses) muss ein Gesamtgewicht von zwischen 170 und 200 kg nachträglich als einheitliches Gebilde in das Fahrzeug deckenseitig auf jeder Fahrzeuglängsseite eingebaut werden. Die Verlegung in einzelnen Abschnitten ist in der Regel nicht möglich, weil die Teile in Richtung ihrer Längsachse aneinander hängen und nicht getrennt werden können.

Der Erfindung liegt deshalb die Aufgabe zugrunde, die deckenseitige Verkleidung, bestehende aus mindestens einem pro Fahrzeugseite angeordneten Luftkanal und einem Gepäckfach, in einem Fahrzeug der eingangs genannten Art so weiterzubilden, dass sie wesentlich einfacher zu montieren ist und dass sie kostengünstiger herstellbar ist.

Zur Lösung der gestellten Aufgabe ist die Erfindung durch die technische Lehre des Anspruches 1 gekennzeichnet.

Erfindungsgemäß ist, dass fahrzeugseitig bereits bei der Herstellung des Gerippes ein von der Dachinnenfläche in den Innenraum abragender Tragarm mindestens mit seinem außenseitigen Ende fest durch verschweißen an dem Gerippe befestigt wird und lastübertragend die Elemente des Innenaufbaus aufnimmt.

Erfindungsgemäß wird die Tragfähigkeit eines solchen Tragarmes noch erhöht, wenn im Abstand von der deckenseitigen Befestigung dieses Tragarmes eine Tragstrebe deckenseitig am Gerippe befestigt wird. Damit wird eine Dreipunkt-Befestigung für den Tragarm vorgeschlagen.

Erfindungsgemäß wird im Folgenden von einem dreipunktseitig gehaltenen Tragarm ausgegangen.

Damit ergibt sich der wesentliche Vorteil, dass der fahrzeugseitig gegebene Einbau mit Tragarm und Tragstrebe bereits bei der Herstellung des Fahrzeuggerippes vorgenommen werden kann und dass der nachfolgende Einbau der deckenseitigen Verkleidung einschließlich Einbau der Luftkanäle, Gepäckablagefächer, Beleuchtungs- und Griffleisten wesentlich einfacher und kostengünstiger erfolgen kann.

Die lastübertragende Konstruktion des erfindungsgemäßen Tragarmes führt dazu, dass dieser nun die Last der nur noch abschnittsweise in Längsrichtung verlegten Luftkanäle und Gepäckablagen aufnimmt.

Die Luftkanäle und Gepäckablagen sind dann nur noch als dünne, nicht tragende Elemente des deckenseitigen Innenaufbaus auf diesem befestigt.

Mit der gegebenen technischen Lehre ergibt sich somit der Vorteil, dass auf eine eigensteife Konstruktion, bestehend aus mindestens einem Luftkanal und einer daran angesetzten Gepäckablage, verzichtet werden kann und dass es im übrigen nicht mehr notwendig ist, dieses komplexe Teil (mit z.B. 11 Meter Länge und einem Gewicht von ca. 100 kg) als durchgehende Konstruktion nachträglich in einem Fahrzeug einzubauen. Vielmehr können die Luftkanäle und Gepäckablagen als mehrere Profil- oder Plattenteile abschnittsweise in Längsrichtung hintereinander liegend und fluchtend miteinander verbunden werden, wobei der Tragarm als lastübertragende Halterung dient.

Somit ist erfindungsgemäß vorgesehen, dass direkt bei der Fahrzeugherstellung im Dachbereich ein in den Innenraum hineinragender Tragarm fest im Dachbereich integriert wird und dass in Richtung der Längsachse des Fahrzeuges mehrere Streben am Dach und an den Tragarm befestigt werden.

Es wird somit erfindungsgemäß ein Grundgerüst für einen Luftkanal und eine Gepäckablage im Fahrzeug fest bei der Herstellung des Fahrzeuggerippes integriert. Auf diese festen, fahrzeugseitig befestigten Streben (bestehend jeweils aus Tragarm und Tragstrebe, die in gegenseitigem Abstand parallel zu einander in Richtung der Fahrzeuglängsachse verlegt sind) werden dann nachträglich aus dünnen, nicht tragenden Verkleidungsteilen der in Richtung der Fahrzeuglängsachse verlaufende Luftkanal und die Gepäckablage ausgebildet.

Damit ergeben sich wesentliche Vorteile gegenüber dem Stand der Technik.

Der erste Vorteil liegt darin, dass man nun nicht mehr eine nachträgliche Montage eines durchgehenden Luftkanals und einer Gepäckablage hat und nicht eigensteife, teuer hergestellte Teile als durchgehendes einziges Teil verlegen muss. Es werden stattdessen nur noch dünne, plattenförmige Verkleidungsteile abschnittsweise in Längsrichtung verlegt, um den Luftkanal und die Gepäckablage herzustellen.

Statt der Verlegung von plattenförmigen Teilen sieht die Erfindung in einer anderen bevorzugten Ausgestaltung vor, dass diese Teile profiliert sind. Beispielsweise hat die Gepäckablage im Querschnitt ein etwa C-förmiges Profil, das zur Fahrzeuglängsmittenachse geöffnet ist. Nunmehr können solche kurzen C-förmigen Profilabschnitte in Längsrichtung hintereinander folgend an den Tragarmen befestigt werden. Gleiches gilt sinngemäß für die abschnittsweise in Längsrichtung zu verlegenden Luftkanäle, die ebenfalls aus mehreren, in Längsrichtung hintereinanderfolgenden, miteinander verbundenen Profilteilen bestehen können.

Weiterer Vorteil der erfindungsgemäßen Maßnahme ist, dass durch den fahrzeugseitigen Einbau der genannten Tragarme und Streben nun der Vorteil besteht, dass auch die Eigensteifigkeit des Fahrzeuggerippes an sich erhöht wird, weil diese Teile den Dachaufbau wesentlich verstärken.

Damit wird das Fahrzeug noch besser gegen Überrollschäden und gegen Eindrücken bei Überrollen des Fahrzeuges geschützt.

Es ergibt sich auch eine einfachere Herstellung bei der Erfindung dadurch, dass eben diese fahrzeugseitigen Tragarme und Streben direkt herstellerseitig eingebaut werden und der Monteur oder Hersteller des Luftkanals und der Gepäckablage nur noch dünne, plattenförmige Verkleidungsbauteile liefert.

Hierdurch ergibt sich auch eine wesentliche Gewichtseinsparung, denn nunmehr reichen dünne plattenförmige Teile aus, die nichttragend sind, um den Luftkanal und die Gepäckablage herzustellen. Dies ist ein wesentlicher Vorteil gegenüber dem Stand der Technik.

Die erfindungsgemäße deckenseitig vorgesehene Tragstrebe muss nicht unbedingt im hinteren Bereich des Tragarmes zur Erreichung einer Dreipunktsaufhängung angeordnet werden. Es reicht aus, diese entfernt vom Halterungspunkt des Tragarmes an der Fahrzeugkarosserie irgendwo deckenseitig anzuordnen. Es ist deshalb in einer anderen Ausgestaltung der Erfindung auch vorgesehen, dass diese Tragstrebe am vorderen Ende des Tragarmes ansetzt, um dort als Halter für weitere Designteile, z.B. Beleuchtungsleiste, Rufanlage, Lichtsteuerung usw. zu dienen.

Es kommt erfindungsgemäß also nur darauf an, dass ein Tragarm mit seinem einen Ende deckenseitig fest mit dem Fahrzeuggerippe durch Verschweißen befestigt wird und dass ferner noch deckenseitig eine Tragstrebe verlegt wird, welche entfernt von diesem Befestigungspunkt von der Decke abgehängt ist und mit dem Tragarm fest verbunden ist.

Damit ergibt sich der Vorteil, dass eine von Haus aus eigensteife Befestigung von Tragarm und Tragstrebe vorhanden ist, die bereits schon den Dachbereich des Fahrzeuges aussteift und dass die nachträglich anzufertigenden Gepäckablagen und Luftkanäle nur noch aus dünnen plattenförmigen Teilen bestehen.

Die Gepäckablage und die Lüftungskanäle müssen daher nicht mehr als schwere eigensteife, über die gesamte Fahrzeuglänge sich durchgehend erstreckende Teile ausgebildet werden, sondern es reicht aus, biegeschlaffe (nicht-eigensteife) plattenförmige Elemente zu verwenden, die in kurzen Abschnitten hintereinander liegend (abschnittsweise) montiert werden können.

Im Übrigen kommt es nicht auf die Formgebung des Tragarmes und der Tragstrebe an. Es reicht aus, eine einseitige Befestigung oder eine Dreifachbefestigung vorzusehen, nämlich einerseits den Tragarm im Übergangsbereich zwischen Wand und Decke des Fahrzeuges fest mit dem Fahrzeugaufbau zu verbinden und ferner die Tragstrebe, einerseits fest mit dem Tragarm und fest mit der Decke des Fahrzeuges zu verbinden.

Wichtig ist also, dass auf die vorherige Befestigungsart eines eigensteifen Gebildes mit etwa 11 m Länge (Fahrzeuglänge des Busses) verzichtet wird, weil ein solches eigensteifes Gebilde ein Gewicht von zwischen 170 und 200 kg aufweist.

Erfindungsgemäß sind nun die Tragarme und die Tragstreben im gegenseitigen Abstand getrennt voneinander über die Längsachse des Fahrzeuges verteilt und sind bereits schon fest mit dem Fahrzeugaufbau verbunden. Die plattenförmigen Einbauteile zur Ausbildung der Gepäckablage und des Luftkanals haben dann nur noch ein Gewicht von etwa 50 bis 100 kg. Der Vorteil besteht dann darin, dass diese Teile nicht auf der gesamten Länge des Busses als einheitliches, durchgehendes Teil eingebaut werden müssen. Sie können vielmehr stückweise oder abschnittsweise verlegt werden, wodurch der Einbau wesentlich einfacher ist und das Gesamtgewicht des fertig gestellten Einbauteils keine Rolle mehr bei der abschnittsweisen Montage spielt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert die linke, deckenseitige Ansicht eines Gerippes eines Fahrzeugaufbaus,
- Figur 2:: die gleiche Darstellung wie Figur 1 mit Einbau von plattenförmigen, biegeschlaffen Elementen,
- Figur 3:: die gleiche Darstellung wie Figur 1 und 2 in perspektivischer Seitenansicht.

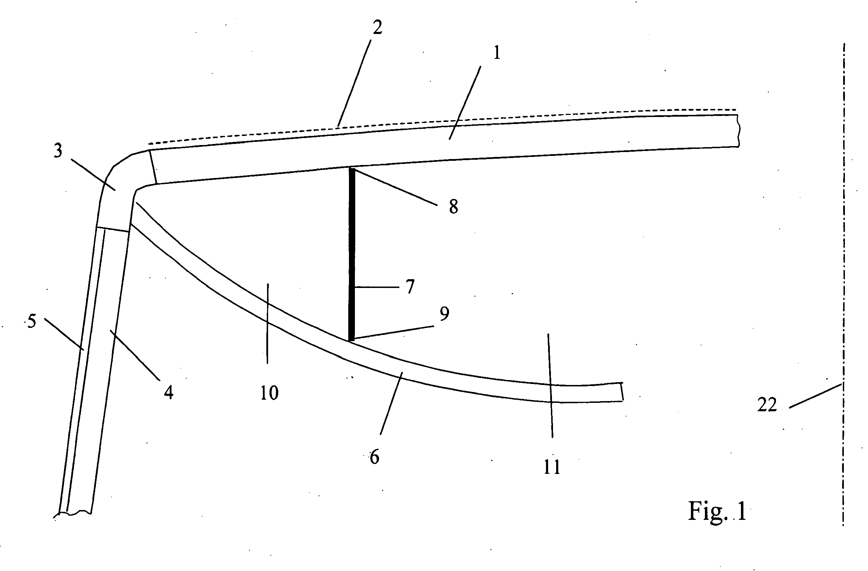

In den Figuren 1 bis 3 ist die Draufsicht auf die linke Seite des deckenseitigen Aufbaus eines Fahrzeuges dargestellt, wobei ein Dachspant 1 in Stirnansicht gezeigt ist, der über einen Eckverbinder 3 mit einem Fensterholm 5 verbunden ist, wobei im Bereich des Fensterholms 5 eine Fensterfläche 4 angeordnet sein kann.

Es ist nicht dargestellt, dass der Dachspant 1 im fertigen Zustand der Fahrgastzelle an seiner Oberseite durch eine Dachhaut 2 abgedeckt ist und deshalb nur in gestrichelter Darstellung gezeigt ist.

Um nun zu gewährleisten, dass die Luftkanäle und die Gepäckablagen aus einzelnen, kurzen und plattenförmigen Elementen zusammengesetzt werden können, ist erfindungsgemäß vorgesehen, dass in den Innenraum der Fahrgastzelle mindestens ein Tragarm 6 hineinragt, der mit seinem linken Ende durch verschweißen entweder mit dem Dachspant 1, mit dem Eckverbinder 3 oder dem Fensterholm 5 verbunden ist.

Erfindungsgemäß ist, dass die jeweilige fahrzeugseitige Befestigung dieses Tragarmes 6 durch verschweißen fest mit dem Gerippe 12 der Fahrzeugzelle verbunden ist, um so einen hochlastübertragenden Tragarm 6 zu schaffen.

Es versteht sich von selbst, dass das Fahrzeug sich jenseits der Längsmittenachse 22 spiegelsymmetrisch fortsetzt und dass auf der gegenüberliegenden Seite zur Längsmittenachse der gleiche, spiegelbildliche Aufbau wie in den Figuren 1 bis 3 vorhanden ist.

Zur weiteren Erhöhung der Tragfähigkeit des Tragarmes ist erfindungsgemäß vorgesehen, dass der Tragarm 6 noch zusätzlich durch eine oder bevorzugt mehrere Tragstreben 7 versteift ist. Hiermit wird die Lastübertragung vom Tragarm 6 auf die Teile des Gerippes 12 der Fahrzeugzelle verbessert.

Im gezeigten Ausführungsbeispiel ist eine erfindungsgemäße sogenannte Dreipunktaufhängung dargestellt, wobei eine Tragstrebe 7 mit einem oberen, deckenseitigen Befestigungspunkt 8 an dem Dachspant 1 und mit einem unteren Befestigungspunkt 9 an dem Tragarm 6 verbunden ist.

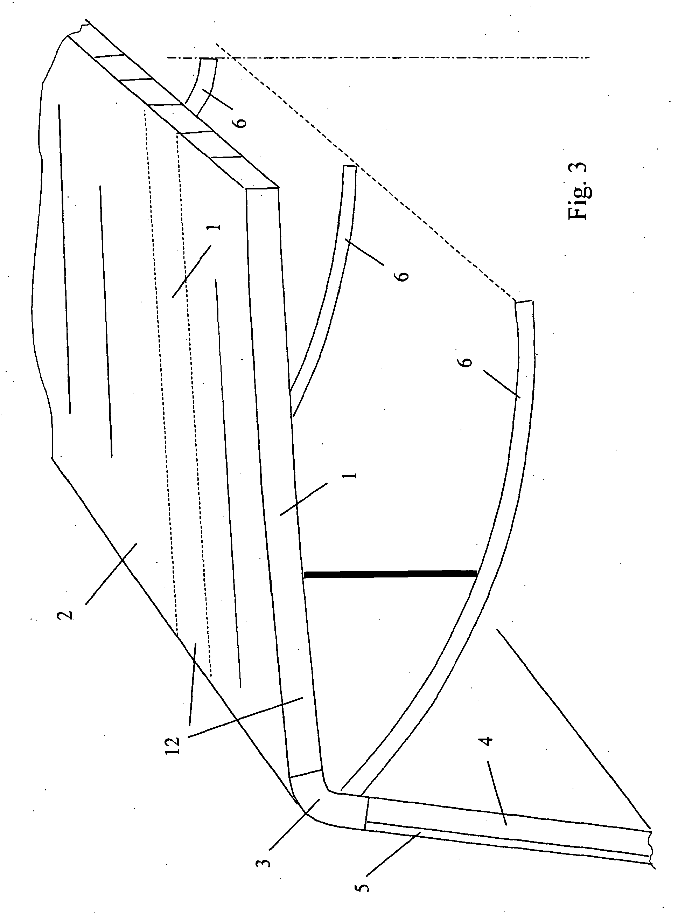

Wie in Figur 3 dargestellt ist, sind die Tragarm 6 in gegenseitigem Abstand in Längsrichtung hintereinander und parallel zueinander angeordnet und bilden somit Auflager für die abschnittsweise zu verlegenden Elemente der Gepäckablage 16 und des Luftkanals 21.

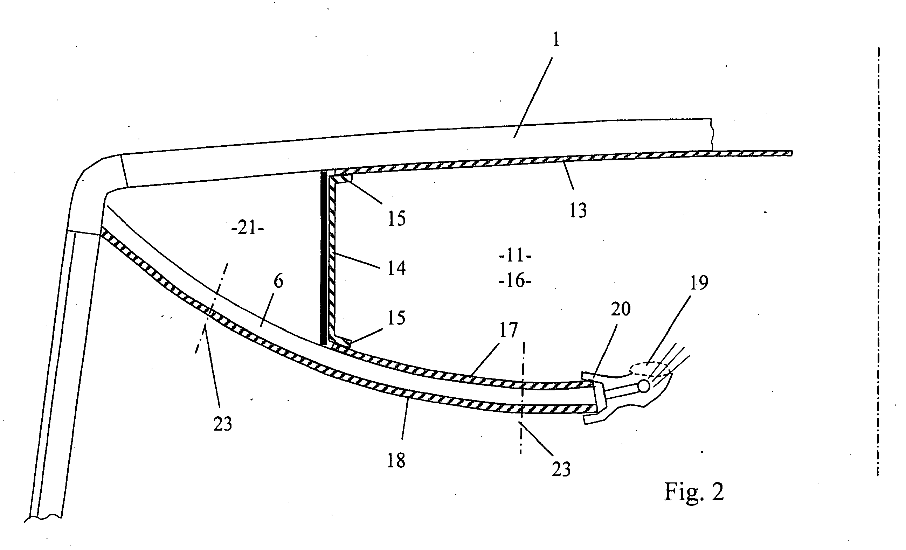

Dies ist in Figur 2 dargestellt. Dort ist erkennbar, dass bevorzugt die Gepäckablage 16 nun in einen Einbauraum 11 aus einzelnen, plattenförmigen Elementen erstellt wird, die zusammengesetzt sind.

Der obere Teil der Gepäckablage kann bevorzugt durch eine Deckenverkleidungsplatte 13 gebildet werden, die an der linken Seite durch eine Seitenverkleidungsplatte 14 gehalten wird, weil dort ein Ansatz 15 mit der Deckenverkleidungsplatte 13 verbunden ist.

Der gegenüberliegende Ansatz 15 der Seitenverkleidungsplatte 14 ist wiederum mit der Bodenverkleidungsplatte 17 der Gepäckablage 16 verbunden, wobei wichtig ist, dass sich die sehr leichten und instabilen, d. h. auch biegeweichen, Elemente 13, 14, 17 nicht über die gesamte Längserstreckung des Gerippes 12 des Fahrzeuges erstrecken, sondern beispielsweise nur 1 oder 2 m lang sind und über entsprechende Anschluss-Stücke in sich daran anschließende Elemente 13, 14, 17 übergehen.

Die Gepäckablage 16 ist abschnittsweise aus den plattenförmigen Elementen 13, 14, 17 gebildet und ist deshalb besonders leicht zu montieren.

Die Unterseite des Tragarmes 6 wird ebenfalls durch eine abschnittsweise verlegte Verkleidungsplatte 18 verkleidet, wobei die Verkleidungsplatte über nur angedeutete Befestigungen 23 mit dem Tragarm 6 verbunden ist.

In Verbindung mit der über die Längsachse des Fahrzeugs durchgehenden, jedoch abschnittsweise verlegten und gleichfalls in Verbindung mit der über die Fahrzeuglängsachse durchgehenden, jedoch abschnittsweise verlegten Seitenverkleidungsplatte 14 und dem ebenfalls in Fahrzeuglängsrichtung durchgehenden und abschnittsweise verlegten Verkleidungsplatte 18 ergibt sich somit ein Luftkanal 21 im oberen, deckenseitigen Bereich des Fahrzeuges.

Es ist nicht dargestellt, dass im Bereich der Verkleidungsplatte 18 noch entsprechende Luftausläße, Luftführungsgitter und andere Elemente angeordnet sein können. Wichtig ist nur, dass der fahrzeugseitig fest mit dem Gerippe 12 verbundene Tragarm 6 den Halter für die plattenförmigen Elemente des Luftkanals 21 und der Gepäckablage 16 bildet, so dass nicht mehr ein eigensteifes, 10 oder 12 m langes Gebilde, bestehend aus Luftkanal und Gepäckablage, nachträglich an der Deckeninnenseite des Fahrzeugs montiert werden muss. Die Figur 2 zeigt ferner, dass die Gepäckablage mit weiteren Funktionselementen kombiniert werden kann, z. B. mit einer Innenbeleuchtung 19, die an eine Befestigungsleiste 20 befestigt ist und die Befestigungsleiste 20 mit ihren Ansätzen die plattenförmigen Elemente 17 und 18 übergreift und dort die Halterung bildet.

Es ist im übrigen nicht dargestellt, dass im Einbauraum 10 für den Luftkanal 21 noch mehrere andere Funktionselemente verlegt werden können und dass beispielsweise auch verschiedene Luftkanäle in diesen Einbauraum 10 lufttechnisch getrennt voneinander verlegt werden können. Es bedarf hierzu nur noch einer weiteren Trennwand im Einbauraum 10, um beispielsweise zwei voneinander getrennte Luftkanäle zu bilden, wobei diese Trennwand ebenfalls wiederum nur abschnittsweise verlegt wird und nicht als durchgehendes, eigensteifes Teil eingebaut werden muss.

### Zeichnungslegende

- 1: Dachspant
- 2: Dachhaut
- 3: Eckverbinder
- 4: Fensterfläche
- 5: Fensterholm
- 6: Tragarm
- 7: Tragstrebe
- 8: Befestigungspunkt
- 9: Befestigungspunkt
- 10: Einbauraum
- 11: Einbauraum
- 12: Gerippe
- 13: Deckenverkleidungsplatte
- 14: Seitenverkleidungsplatte
- 15: Ansatz
- 16: Gepäckablage
- 17: Bodenverkleidungsplatte
- 18: Verkleidungsplatte
- 19: Innenbeleuchtung
- 20: Befestigungsleiste
- 21: Luftkanal
- 22: Längsmittenachse
- 2: Befestigung

## Patentansprüche

1. Verfahren zur Herstellung eines Land-Wasser oder Luftfahrzeuges mit einer deckenseitigen Innenverkleidung, das zur Beförderung einer größeren Anzahl von Passagieren geeignet ist und deckenseitig ein Fahrzeuggerippe (12) und mindestens einen in Längsrichtung des Fahrzeuges verlaufenden Luftkanal (21) für die Klimatisierung und mindestens eine in gleicher Richtung verlaufende Gepäckablage (16) aufweist,
wobei in einem ersten Verfahrensschritt ein Fahrzeuggerippe hergestellt wird, das aus einem Dachgerippe, Seitenwänden und einem Bodengerippe besteht,
und in einem zweiten Verfahrensschritt am Dachgerippe angesetzte Tragarme (6) befestigt werden,
und in einem dritten Verfahrensschritt die Verkleidungs- und Flächenteile an diesen Tragarmen befestigt werden, welche den mindestens einen Luftkanal und mindestens eine Gepäckablage bilden,
**dadurch gekennzeichnet, dass**
bereits im ersten Verfahrensschritt, das heißt bei der Herstellung des Gerippes, von der Dachinnenfläche in den Innenraum abragende Tragarme (6) mindestens mit ihren außenseitigen Enden an Befestigungspunkten fest an dem Gerippe durch Verschweißen ¹ befestigt werden,
und dass ferner im gleichen Verfahrensschritt deckenseitig an jedem Trogarm eine Tragstrebe (7) verlegt wird, welche entfernt von dem jeweiligen Befestigungspunkt von der Decke abgehängt wird und mit dem Tragarm (6) fest verbunden wird², die **dadurch** eine Dreipunkt-Befestigung (8, 9, 3, 4) für den jeweiligen Tragarm (6) bildet³, wodurch eine von Haus aus eigensteife Befestigung von Tragarm(6) und Tragstrebe (7) gebildet wird, die bereits in diesem Verfahrensschritt den Dachbereich des Fahrzeuges aussteift.
¹ Sp.4, Z. 11
² Sp.4, Z. 10-13
³ Sp.2, Z. 19, 20

2. Fahrzeug hergestellt nach dem Verfahren nach Anspruch 1.

3. Fahrzeug nach Anspruch 2, **dadurch gekennzeichnet, dass** der Tragarm (6) nur noch als Halter für eine an dessen freien Ende zu befestigende Griff- und Beleuchtungsleiste dient und dass ferner der Tragarm (6) und die Tragstrebe (7) nur noch als Grundträger dienen, auf denen dünne, nicht tragende Elemente des deckenseitigen Innenaufbaus, einschließlich Luftkanälen und Gepäckablagen befestigt sind.

4. Fahrzeug nach Anspruch 3, **dadurch gekennzeichnet, dass** die Elemente plattenförmig ausgebildet sind.

5. Fahrzeug nach einem der Ansprüche 3 oder 4, **dadurch gekennzeichnet, dass** die Elemente als Profilteile ausgebildet sind.

6. Fahrzeug nach einem der Ansprüche 3 bis 5 **dadurch gekennzeichnet, dass** die Elemente (14, 17, 18) in ihrer Längserstreckung kürzer sind als die Längserstreckung des Fahrzeuges, sodass sie in hintereinander liegenden, zu einander fluchtenden Abschnitten in Richtung der Längsachse verlegt sind.

7. Fahrzeug nach einem der Ansprüche 2 bis 6, **dadurch gekennzeichnet, dass** die im gegenseitigen Abstand in Fahrzeuglängsrichtung verlegten Tragarme (6) mit ihren Längsachsen annähernd quer zur Fahrzeuglängsachse am Fahrzeuggerippe (12) befestigt sind.

## Claims

1. A method of manufacturing a land craft, water craft, or aircraft, comprising an interior ceiling cladding, capable of transporting a large number of passengers and comprising, at the ceiling, a vehicle frame (12) and at least one air duct (21) extending in the longitudinal direction of the vehicle for air conditioning purposes, and at least one luggage rack (16) extending in the same direction,
wherein, in a first method step, a vehicle frame is produced, consisting of a roof frame, side walls and a floor frame,
and, in a second method step, brackets (6) supported by the roof frame are attached,
and, in a third method step, the cladding and surface parts, which form the at least one air duct and at least one luggage rack, are mounted on these brackets,
**characterised in that**
already in the first method step, that is during the production of the frame, brackets (6) protruding from the inner surface of the roof into the interior are fixedly attached at least at their outer ends on the frame by means of welding at attachment points,
and **in that**, furthermore, in the same method step, a supporting strut (7) is installed on each bracket at the ceiling, which is suspended from the ceiling remote from each attachment point and is fixedly connected to the bracket (6), which thus forms a three-point attachment (8, 9, 3, 4) for each bracket (6), which autonomously forms an inherently stiff attachment of the bracket (6) and the supporting strut (7), providing stiffness to the roof area of the vehicle already in this method step.

2. A vehicle manufactured according to the method defined in claim 1.

3. The vehicle according to claim 2, **characterised in that** the bracket (6) only serves as a support for a gripping and lighting strip to be attached at its free end, and **in that**, furthermore, the bracket (6) and the supporting strut (7) only serve as basic supports on which thin, non-load-bearing elements of the interior ceiling structure, including air ducts and luggage racks, are attached.

4. The vehicle according to claim 3, **characterised in that** the elements have a plate-like configuration.

5. The vehicle according to any one of claims 3 or 4, **characterised in that** the elements are formed as profile parts.

6. The vehicle according to any one of claims 3 to 5, **characterised in that** the elements (14, 17, 18), in their longitudinal extension, are shorter than the longitudinal extension of the vehicle, so that they are installed in sections arranged in series aligned in the direction of the longitudinal axis.

7. The vehicle according to any one of claims 2 to 6, **characterised in that** the brackets (6) that are installed in a spaced relationship to each other in the vehicle's longitudinal direction are attached on the vehicle frame (12) with their longitudinal axes approximately transverse to the vehicle's longitudinal axis.

## Revendications

1. Procédé pour fabriquer un véhicule terrestre, un bateau ou un avion avec un revêtement intérieur côté plafond, qui est apte à transporter un assez grand nombre de passagers et qui présente côté plafond une ossature de véhicule (12), au moins un conduit d'air (21) qui s'étend dans le sens longitudinal du véhicule, pour la climatisation, et au moins un porte-bagages (16) qui s'étend dans le même sens,
selon lequel lors d'une première étape on fabrique une ossature de véhicule qui se compose d'une ossature de toit, de parois latérales et d'une ossature de plancher,
lors d'une deuxième étape on fixe des bras porteurs (6) rapportés sur l'ossature de toit,
et lors d'une troisième étape on fixe à ces bras porteurs les éléments de revêtement et de surface, qui forment le ou les conduits d'air et au moins un porte-bagages,
**caractérisé en ce que** dès la première étape du procédé, c'est-à-dire lors de la fabrication de l'ossature, les bras porteurs (6), qui dépassent dans l'habitacle à partir de la surface intérieure du toit, sont fixés par soudage à l'ossature, au niveau de points de fixation, au moins avec leurs extrémités extérieures,
et **en ce que** lors de la même étape, on pose également sur chaque bras porteur, côté plafond, une barre de suspension (7) que l'on suspend au plafond loin du point de fixation, que l'on relie solidement au bras porteur (6) et qui forme ainsi une fixation à trois points (8, 9, 3, 4) pour le bras porteur (6), ce qui forme une fixation rigide en soi du bras porteur (6) et de à barre de fixation (7), qui rigidifie dès cette étape la zone du plafond du véhicule.

2. Véhicule fabriqué selon le procédé de la revendication 1.

3. véhicule selon la revendication 2, **caractérisé en ce que** le bras porteur (6) ne sert plus que de support pour une barre pour se tenir et pour l'éclairage destinée à être fixée à l'extrémité libre dudit bras (6), et **en ce que** par ailleurs le bras porteur (6) et la barre de suspension (7) ne servent plus que de supports de base sur lesquels sont fixés des éléments minces, non porteurs, de la structure intérieure située côté plafond, y compris des conduits d'air et des porte-bagages.

4. Véhicule selon la revendication 3, **caractérisé en ce que** les éléments ont la forme de plaques.

5. Véhicule selon l'une des revendications 3 ou 4, **caractérisé en ce que** les éléments sont conçus comme des éléments profilés.

6. Véhicule selon l'une des revendications 3 à 5, **caractérisé en ce que** l'extension longitudinale des éléments (14, 17, 18) est plus courte que celle du véhicule, de sorte que ces éléments sont posés dans le sens de l'axe longitudinal en tronçons placés les uns derrière les autres et alignés.

7. Véhicule selon l'une des revendications 2 à 6, **caractérisé en ce que** les bras porteurs (6) posés en étant espacés les uns des autres dans le sens longitudinal du véhicule sont fixés à l'ossature de véhicule (12) avec leurs axes longitudinaux approximativement transversaux par rapport à l'axe longitudinal du véhicule.
